# EUROPEAN PATENT APPLICATION

(11) **EP 4 553 751 A2**
(43) Date of publication of application: **14.05.2025**
(21) Application number: 25160914.5
(22) Date of filing: 28.02.2025
(51) Int. Cl.: G06T 1/20

(54) **SYSTEM-ON-CHIP-BASED IMAGE PROCESSING METHOD AND APPARATUS, DEVICE, AND STORAGE MEDIUM**

(30) Priority: 01.03.2024 CN 202410239551
(71) Applicant: Beijing Horizon Information Technology Co., Ltd., Beijing 100094 (CN)
(72) Inventor: JIN, Lingfang, Beijing, 100094 (CN); WANG, Ping, Beijing, 100094 (CN); LOU, Zengyuan, Beijing, 100094 (CN); SUN, Kaikai, Beijing, 100094 (CN); SHEN, Youjin, Beijing, 100094 (CN)
(74) Representative: Patentanwälte Magenbauer & Kollegen Partnerschaft mbB

(57) **Abstract**

Disclosed are a system-on-chip-based image processing method, a device, and a storage medium. The method includes: determining abnormal information generated during processing a first image data frame by a plurality of image processing modules in the system-on-chip and path configuration information corresponding to the plurality of image processing modules; determining an abnormal module that generates the abnormal information and an initial handling strategy used to address the abnormal information; determining a target to-be-processed module from the plurality of image processing modules based on the abnormal module, the initial handling strategy, and the path configuration information; and processing the target to-be-processed module based on the initial handling strategy to obtain the processed target to-be-processed module, so as to continue to process a second image data frame by using the processed target to-be-processed module. FuSa abnormalities can be effectively eliminated to avoid problems such as abnormalities and crashes of an entire VPS.

## Description

### FIELD OF THE INVENTION

This disclosure relates to technologies of intelligent driving, and in particular, to a system-on-chip-based image processing method and apparatus, a device, and a storage medium.

### BACKGROUND OF THE INVENTION

In an intelligent driving system, when image data is captured by an in-vehicle camera, the image data may be processed through a video processing system (VPS) on an intelligent driving chip (corresponding to a system-on-chip). Typically, the VPS includes a plurality of image processing modules that may process images captured by the in-vehicle camera, to control a vehicle to perform corresponding actions.

During processing the image data by the plurality of image processing modules, when some of the plurality of image processing modules have functional safety (FuSa) abnormalities, abnormality elimination and recovery are generally performed on only the image processing modules with the abnormalities, so as to eliminate the FuSa abnormalities. However, the image processing modules in the VPS are coupled with each other. Therefore, processing only the image processing modules with the abnormalities cannot eliminate the FuSa abnormalities, and may also cause the entire VPS to malfunction, leading to problems such as VPS crashes.

### SUMMARY OF THE INVENTION

Typically, a manner of performing abnormality elimination and recovery on only image processing modules with abnormalities cannot eliminate FuSa abnormalities, and may also cause an entire VPS to malfunction, leading to problems such as VPS crashes.

To resolve the foregoing technical problems, this disclose provide a system-on-chip-based image processing method, including:
determining abnormal information generated during processing a first image data frame by a plurality of image processing modules in the system-on-chip and path configuration information corresponding to the plurality of image processing modules;
determining an abnormal module that generates the abnormal information and an initial handling strategy used to address the abnormal information;
determining a target to-be-processed module from the plurality of image processing modules based on the abnormal module, the initial handling strategy, and the path configuration information;
processing the target to-be-processed module based on the initial handling strategy; and
continuing to process a second image data frame by using the processed target to-be-processed module.

According to a second aspect of this disclose, a system-on-chip-based image processing apparatus is provided, including:
a first determining module, configured to determine abnormal information generated during processing a current image data frame by a plurality of image processing modules in the system-on-chip and path configuration information corresponding to the plurality of image processing modules;
a second determining module, configured to determine an abnormal module that generates the abnormal information and an initial handling strategy used to address the abnormal information;
a third determining module, configured to determine a target to-be-processed module from the plurality of image processing modules based on the abnormal module, the initial handling strategy, and the path configuration information;
a first processing module, configured to process the target to-be-processed module based on the initial handling strategy; and
a second processing module, configured to continue to process a next image data frame by using the processed target to-be-processed module.

An embodiment of a third aspect of this disclosure provides a computer readable storage medium. The storage medium stores a computer program, and the computer program is used for implementing the system-on-chip-based image processing method according to the first aspect.

An embodiment in a fourth aspect of this disclosure provides an electronic device, where the electronic device includes:
a processor; and
a memory, configured to store processor-executable instructions, where
the processor is configured to read the executable instructions from the memory, and execute the instructions to implement the system-on-chip-based image processing method according to the first aspect.

In the embodiments of this disclosure, the abnormal information generated in the process of processing the first image data frame by the plurality of image processing modules in the system-on-chip and the path configuration information corresponding to the plurality of image processing modules are determined, so that the abnormal module and the initial handling strategy are determined based on the abnormal information. Finally, the target to-be-processed module is determined from the plurality of image processing modules based on the abnormal module, the initial handling strategy, and the path configuration information. In other words, in the process of determining the target to-be-processed module, an abnormal path module, a coupling relationship between the abnormal path module and another path module, and an actual application scenario of image processing are comprehensively considered. Therefore, processing the determined target to-be-processed module based on the initial handling strategy can effectively eliminate FuSa abnormalities, so as to avoid problems such as abnormalities and crashes of an entire VPS, thereby improving safety of intelligent driving.

### BRIEF DESCRIPTION OF THE DRAWINGS

FIG. 1 is a schematic diagram of an intelligent driving chip according to an exemplary embodiment of this disclosure;
FIG. 2 is a schematic diagram of another intelligent driving chip according to an exemplary embodiment of this disclosure;
FIG. 3 is a schematic flowchart of a system-on-chip-based image processing method according to an exemplary embodiment of this disclosure;
FIG. 4 is a schematic flowchart of another system-on-chip-based image processing method according to an exemplary embodiment of this disclosure;
FIG. 5 is a schematic flowchart of still another system-on-chip-based image processing method according to an exemplary embodiment of this disclosure;
FIG. 6 is a schematic flowchart of yet another system-on-chip-based image processing method according to an exemplary embodiment of this disclosure;
FIG. 7 is a schematic flowchart of still yet another system-on-chip-based image processing method according to an exemplary embodiment of this disclosure;
FIG. 8 is a schematic flowchart of a further system-on-chip-based image processing method according to an exemplary embodiment of this disclosure;
FIG. 9 is a schematic flowchart of a still further system-on-chip-based image processing method according to an exemplary embodiment of this disclosure;
FIG. 10 is a schematic flowchart of a yet further system-on-chip-based image processing method according to an exemplary embodiment of this disclosure;
FIG. 11 is a schematic flowchart of a still yet further system-on-chip-based image processing method according to an exemplary embodiment of this disclosure;
FIG. 12 is a schematic diagram of a composition and structure of a system-on-chip-based image processing apparatus according to an exemplary embodiment of this disclosure;
FIG. 13 is a schematic diagram of a composition and structure of another system-on-chip-based image processing apparatus according to an exemplary embodiment of this disclosure;
FIG. 14 is a schematic diagram of a composition and structure of still another system-on-chip-based image processing apparatus according to an exemplary embodiment of this disclosure;
FIG. 15 is a schematic diagram of a composition and structure of yet another system-on-chip-based image processing apparatus according to an exemplary embodiment of this disclosure;
FIG. 16 is a schematic diagram of a composition and structure of still yet another system-on-chip-based image processing apparatus according to an exemplary embodiment of this disclosure;
FIG. 17 is a schematic diagram of a composition and structure of a further system-on-chip-based image processing apparatus according to an exemplary embodiment of this disclosure;
FIG. 18 is a schematic diagram of a composition and structure of a still further system-on-chip-based image processing apparatus according to an exemplary embodiment of this disclosure; and
FIG. 19 is a schematic diagram of composition of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

In an intelligent driving system, it is needed to capture driving environment of a vehicle through in-vehicle cameras located at different positions, and to process raw images output by the in-vehicle cameras through various image processing modules in a VPS, so as to plan a driving path for the vehicle based on processed image data, and control a motor or an actuator on the vehicle to perform corresponding actions. Therefore, it is required to ensure quality of the processed image data to improve stability and safety of intelligent driving.

Currently, a FuSa mechanism is a key capability in the field of automotive regulations, and the VPS on an intelligent driving chip and the various image processing modules in the VPS also have the FuSa mechanism. Generally, during a process of processing the raw images by a plurality of image processing modules in the VPS, when a FuSa abnormality occurs in one of the plurality of image processing modules, abnormality elimination and recovery are forcibly performed on only internal logic of the image processing module with the FuSa abnormality, so as to eliminate the FuSa abnormality.

However, there is certain coupling between upstream and downstream image processing modules on a video path in the VPS. Therefore, processing only the image processing module with the abnormality may make the video path cannot be linked as a whole. As a result, some FuSa abnormalities need to be analyzed and operated repeatedly by different image processing modules, or FuSa abnormalities occurring in an upper-level image processing module flow into a lower-level image processing module. In this way, not only the FuSa abnormalities cannot be eliminated, but also the entire VPS may be caused to malfunction, which leads to problems such as VPS crashes, thus affecting operational efficiency of an in-vehicle system and safety of intelligent driving.

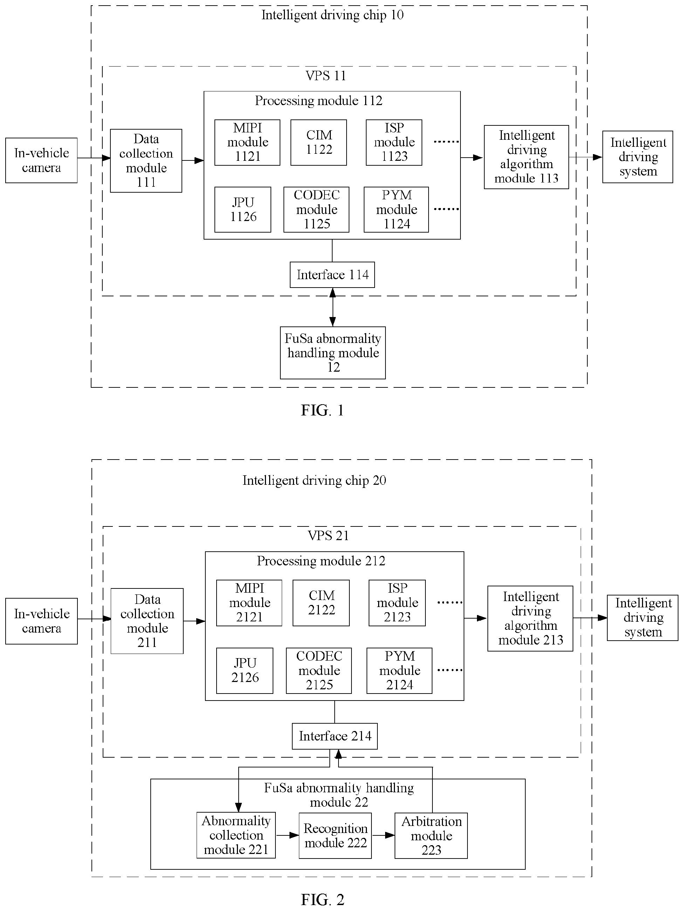

FIG. 1 is a schematic diagram of an intelligent driving chip according to an exemplary embodiment of this disclosure. As shown in FIG. 1, an intelligent driving chip 10 includes a VPS 11 and a FuSa abnormality handling module 12. The VPS 11 includes a data collection module 111, a processing module 112, an intelligent driving algorithm module 113, and an interface 114. The processing module 112 includes a mobile industry processor interface (MIPI) module 1121, a camera interface module (CIM) 1122, an image signal processing (ISP) module 1123, an image pyramid (PYM) module 1124, a video encoding (CODEC) module 1125, and a joint photographic experts group (JPEG) processing unit (JPU) 1126.

An input end of the data collection module 111 is coupled to an output end of an in-vehicle camera. The processing module 112 is coupled between an output end of the data collection module 111 and an input end of the intelligent driving algorithm module 113. The interface 114 is coupled between the processing module 112 and the FuSa abnormality handling module 12.

An image processing process is exemplarily described below with reference to FIG. 1.

First, a user inputs a module connection configuration operation to the processing module 112 in the VPS 11. The processing module 112 responds to the module connection configuration operation and establishes a video path based on the MIPI module 1121, the CIM 1122, the ISP module 1123, the PYM module 1124, the CODEC module 1125, and the JPU 1126 (In some examples, the video path may include some image processing modules in the processing module 112. For example, the video path may include the MIPI module 1121, the CIM 1122, the ISP module 1123, the PYM module 1124, and the JPU 1126 that are sequentially coupled).

Subsequently, the user inputs a working mode configuration operation to the processing module 112 in the VSP 11. In response to the working mode configuration operation, the processing module 112 determines working mode configuration information; and determines, based on the working mode configuration information, a self-processing module used for data interception and processing from path modules on the video path.

Subsequently, the data collection module 111 obtains raw image data (a raw image) from an output end of the in-vehicle camera, and outputs the obtained raw image to an input end of the processing module 112.

Subsequently, the input raw image is processed sequentially by using various path modules on the video path of the processing module 112 to obtain processed image data, which is output to the intelligent driving algorithm module 113.

Finally, the intelligent driving algorithm module 113 generates intelligent driving data based on the processed image data, and outputs the intelligent driving data to an intelligent driving system to achieve intelligent driving of the vehicle.

For example, the CIM 1122 has a FuSa abnormality during the process of sequentially processing the raw image by various path modules on the video path of the processing module 112. A FuSa abnormality handling process may include the following steps.

First, the CIM 1122 inputs abnormal information to the interface 114.

Second, the interface 114 receives the abnormal information and transfers the same to the FuSa abnormality handling module 12.

Further, the FuSa abnormality handling module 12 determines the image processing module with the FuSa abnormality as the CIM 1122 based on the received abnormal information, generates processing operation instructions (such as a frame discard or reset operation) for the CIM 1122, and sends the processing operation instructions to the CIM 1122 through the interface 114.

Finally, the CIM 1122 receives the processing operation instructions, and responds to the processing operation instructions to perform forcible abnormality elimination and recovery on internal logic thereof.

In this embodiment of this disclosure, due to mutual coupling between the CIM 1122 and the MIPI module 1121, the ISP module 1123, the PYM module 1124, the CODEC module 1125, and the JPU 1126, processing only the CIM 1122 may result in repeated analysis and operation of the MIPI module 1121 and/or the ISP module 1123, or may cause the FuSa abnormalities to flow into other image processing modules at downstream of the ISP module 1123 and the CIM 1122. In this way, not only the FuSa abnormalities cannot be eliminated, but also the entire VPS may be caused to malfunction, which leads to problems such as VPS crashes, thus affecting the operational efficiency of the in-vehicle system and safety of the intelligent driving.

Based on the foregoing technical problems, this embodiment of this disclosure provides a method for collaboratively processing FuSa abnormalities generated by any image processing module on the video path by using all image processing modules on the video path. In some examples, all FuSa abnormalities on the video path may be analyzed and classified, and corresponding processing measures may be taken for different abnormality types, so as to achieve collaborative processing of software and hardware on the entire video path, thereby effectively eliminating the FuSa abnormalities and avoiding VPS abnormalities. Thus, image quality is ensured, and stability and safety of intelligent driving are improved.

### Exemplary system

FIG. 2 is a schematic diagram of another intelligent driving chip according to an exemplary embodiment of this disclosure. As shown in FIG. 2, an intelligent driving chip 20 includes a VPS 21 and a FuSa abnormality handling system 22. The VPS 21 includes a data collection module 211, a processing module 212, an intelligent driving algorithm module 213, and an interface 214. The processing module 212 includes image processing modules such as an MIPI module 2121, a CIM 2122, an ISP module 2123, a PYM module 2124, a CODEC module 2125, and a JPU 2126. The FuSa abnormality handling system 22 includes an abnormality collection module 221, a recognition module 222, and an arbitration module 223.

An input end of the data collection module 211 is coupled to an output end of an in-vehicle camera. The processing module 212 is coupled between an output end of the data collection module 211 and an input end of the intelligent driving algorithm module 213. The interface 214 is coupled to an input end of the abnormality collection module 221, and an output end of the abnormality collection module 221 is coupled to an input end of the recognition module 222. An output end of the recognition module 222 is coupled to an input end of the arbitration module 223, and an output end of the arbitration module 223 is coupled to the interface 214.

An image processing process is exemplarily described below with reference to FIG. 2.

As shown in FIG. 2, first, a user inputs a module connection configuration operation to the processing module 212 in the VPS 21. The processing module 212 responds to the module connection configuration operation and establishes a video path based on the MIPI module 2121, the CIM 2122, the ISP module 2123, the PYM module 2124, the CODEC module 2125, and the JPU 2126 (In some examples, the video path may include some image processing modules in the processing module 212. For example, the video path may include the MIPI module 2121, the ISP module 2123, the PYM module 2124, and the JPU 2126 that are sequentially coupled).

Subsequently, the user inputs a working mode configuration operation to the processing module 212 in the VSP 21. In response to the working mode configuration operation, the processing module 212 determines working mode configuration information; and determines, based on the working mode configuration information, a self-processing module used for data interception and processing from path modules on the video path.

Subsequently, the data collection module 211 obtains raw image data (a raw image) from an output end of the in-vehicle camera, and outputs the obtained raw image to an input end of the processing module 212.

Further, the input raw image is processed sequentially by using various path modules on the video path of the processing module 212 to obtain processed image data, and the processed raw image is output to the intelligent driving algorithm module 213.

Finally, the intelligent driving algorithm module 213 generates intelligent driving data based on the processed raw image, and outputs the intelligent driving data to an intelligent driving system to achieve intelligent driving of the vehicle.

For example, the CIM 2122 has a FuSa abnormality during the process of sequentially processing the raw image by path modules on the video path of the processing module 212. A FuSa abnormality handling process may include the following steps.

First, the CIM 2122 inputs abnormal information to the interface 214. The interface 214 receives the abnormal information and reports the same to the abnormality collection module 221.

Second, the abnormality collection module 221 receives the abnormal information and outputs the same to the recognition module 222.

Further, the recognition module 222 receives the abnormal information and searches for an abnormality handling correspondence (for example, an abnormality handling strategy table) stored in a database based on the abnormal information, to determine a handling strategy for eliminating the FuSa abnormality, and output the handling strategy and the CIM 2122 with the FuSa abnormality (for example, a name of the image processing module or an identifier representing the image processing module) to the arbitration module 223.

Finally, the arbitration module 223 determines a target to-be-processed module from various path modules on the video path based on the working mode configuration information, the CIM 2122, and the handling strategy; and generates and distributes processing operation instructions corresponding to the target to-be-processed module to the target to-be-processed module.

In this embodiment of this disclosure, the target to-be-processed module is determined from various path modules on the video path based on the working mode configuration information, the abnormal path module, and the handling strategy, the abnormal path module, a coupling relationship between the abnormal path module and another path module, and an actual application scenario of image processing are comprehensively considered. Therefore, processing the determined target to-be-processed module can effectively eliminate FuSa abnormalities, so as to avoid problems such as abnormalities and crashes of an entire VPS, thereby improving safety of intelligent driving.

### Exemplary method

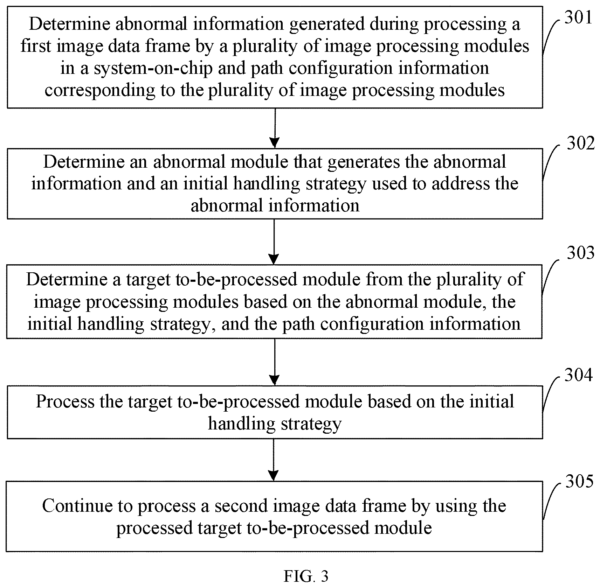

FIG. 3 is a schematic flowchart of a system-on-chip-based image processing method according to an exemplary embodiment of this disclosure. As shown in FIG. 3, the system-on-chip-based image processing method may include the following steps 301 to 304.

Step 301. Determine abnormal information generated during processing a first image data frame by a plurality of image processing modules in the system-on-chip and path configuration information corresponding to the plurality of image processing modules.

For example, the system-on-chip may be an intelligent driving chip. For example, as shown in FIG. 2, the system-on-chip may be an intelligent driving chip 20.

For example, the plurality of image processing modules may include all or some of image processing modules in a VPS system, which may be determined based on connection configuration information in the path configuration information. In some examples, as shown in FIG. 2, the plurality of image processing modules may include at least one of image processing module such as an MIPI module 2121, a CIM 2122, an ISP module 2123, a PYM module 2124, a CODEC module 2125, and a JPU 2126. If the connection configuration information indicates that the MIPI module 2121, the ISP module 2123, the PYM module 2124, and the JPU 2126 are sequentially coupled in series, it may be determined that the plurality of image processing modules include the MIPI module 2121, the ISP module 2123, the PYM module 2124, and the JPU 2126. In some other examples, since the plurality of image processing modules are modules that process the first image data frame, the plurality of image processing modules may be determined as multiple path modules on the video path.

For example, the first image data frame may be a first frame of image data processed by the plurality of image processing modules or image data processed at a current moment. In some examples, as shown in FIG. 2, the first image data frame may be a raw image that is output from an in-vehicle camera to the data collection module 211 at the current moment, and is transferred to the processing module 212 through the data collection module 211.

For example, the abnormal information may be all information used to explain generation of a FuSa abnormality. In some examples, the abnormal information may include specific information about the abnormality and/or an ID number of the abnormality (a type of FuSa abnormality may be determined through the ID number). This is not limited in this embodiment of this disclosure. The specific information about the abnormality may include a name of an image processing module or a submodule that generates the FuSa abnormality, the type of the FuSa abnormality, and other specific information.

For example, the path configuration information may be information determined based on a path configuration operation input by the user. The path configuration information may include connection mode configuration information and working mode configuration information. In some examples, the connection mode configuration information and the working mode configuration information may be implemented through a same configuration operation or through different configuration operations. This is not limited in this embodiment of this disclosure.

For example, as shown in FIG. 2, the intelligent driving chip 20 may first obtain the path configuration operation input by the user, and determine the path configuration information based on the path configuration operation input by the user; determine the multiple path modules included in the video path of the processing module 212 based on the connection configuration information in the path configuration information; determine a self-processing module used for data interception and processing in the path modules based on the working mode configuration information in the path configuration information; and then process the raw image input from the in-vehicle camera through the multiple determined path modules. If at least one path module generates a FuSa abnormality during the process of processing the raw image by multiple path modules, the at least one path module that generates the FuSa abnormality may generate abnormal information for the corresponding path module, and report the abnormal information to an abnormality collection module 221 through an interface 214. Finally, the abnormality collection module 221 receives the abnormal information and outputs the same to a recognition module 222.

Step 302. Determine an abnormal module that generates the abnormal information and an initial handling strategy used to address the abnormal information.

For example, the initial handling strategy may be a relatively conservative handling strategy that is preset for different abnormality types, which may be updated based on validity of the strategy. In some examples, the initial handling strategy may include different levels of handling strategies. For example, the initial handling strategy may include frame discard, module reset, upstream module reset, downstream module frame discard, and system reset with increasing levels. This is not specifically limited in this embodiment of this disclosure.

For example, as shown in FIG. 2, the recognition module 222 may obtain the abnormal information from an output end of the abnormality collection module 221, determine an abnormal image processing module and the initial handling strategy corresponding to the abnormal information based on the abnormal information and multiple preset handling strategies, and output the abnormal image processing module and the initial handling strategy to an arbitration module 223.

Step 303. Determine a target to-be-processed module from the plurality of image processing modules based on the abnormal module, the initial handling strategy, and the path configuration information.

For example, the target to-be-processed module may be at least one of the plurality of image processing modules. In some examples, the target to-be-processed module may or may not include the abnormal module. In some other examples, the target to-be-processed module may include at least the self-processing module, which is not limited in this embodiment of this disclosure.

For example, as shown in FIG. 2, the arbitration module 223 may receive the abnormal image processing module, the initial handling strategy, and the working mode configuration information in the path configuration information; and determine, based on the abnormal image processing module, the initial handling strategy, and the working mode configuration information in the path configuration information, at least one path module from the multiple path modules as the target to-be-processed module through a preset image processing module determining rule.

Step 304. Process the target to-be-processed module based on the initial handling strategy.

For example, the target to-be-processed module may be obtained first, and then corresponding processing operation instructions may be generated based on the target to-be-processed module and the initial handling strategy. Internal logic in the target to-be-processed module may be processed based on the processing operation instructions to obtain the processed target to-be-processed module.

In some examples, as shown in FIG. 2, the arbitration module 223 may generate the processing operation instructions corresponding to the initial handling strategy and the target to-be-processed module after determining the target to-be-processed module, and deliver the processing operation instructions to the corresponding target to-be-processed module. In response to the processing operation instructions, frame discarding or resetting is performed on the target to-be-processed module to obtain the target to-be-processed module after the frame discard or reset processing. After the processed target to-be-processed module is obtained, the second image data frame continues to be processed by using the processed target to-be-processed module.

In some examples, different initial handling strategies and/or different target to-be-processed modules may correspond to different processing operation instructions. For example, for a case in which the initial handling strategy is the frame discard and the target to-be-processed module is the ISP module 2123, the processing operation instruction for the ISP module 2123 may be a frame-discard instruction for the ISP module 2123. For a case in which the initial handling strategy is the module reset, and the target to-be-processed modules are the ISP module 2123 and the path module at upstream of the ISP module 2123, that is, the MIPI module 2121, processing operation instructions for the ISP module 2123 and the MIPI module 2121 may be reset instructions for the ISP module 2123 and the MIPI module 2121.

Step 305. Continue to process a second image data frame by using the processed target to-be-processed module.

For example, as shown in FIG. 2, the second image data frame may be a raw image subsequent to the first image data frame. The raw image may be output from the in-vehicle camera to the data collection module 211, and then output to the processing module 212 through the data collection module 211. In some examples, acquisition time of the second image data frame and the first image data frame may or may not be consecutive, which is not limited in this embodiment of this disclosure.

In the embodiments of this disclosure, the abnormal information generated in the process of processing the first image data frame by the plurality of image processing modules in the system-on-chip and the path configuration information corresponding to the plurality of image processing modules are determined, so that the abnormal module and the initial handling strategy are determined based on the abnormal information. Finally, the target to-be-processed module is determined from the plurality of image processing modules based on the abnormal module, the initial handling strategy, and the path configuration information. In other words, in the process of determining the target to-be-processed module, the abnormal path module, a coupling relationship between the abnormal path module and another path module, and an actual application scenario of image processing are comprehensively considered. Therefore, processing the determined target to-be-processed module based on the initial handling strategy can effectively eliminate FuSa abnormalities, so as to avoid problems such as abnormalities and crashes of an entire VPS, thereby improving safety of intelligent driving.

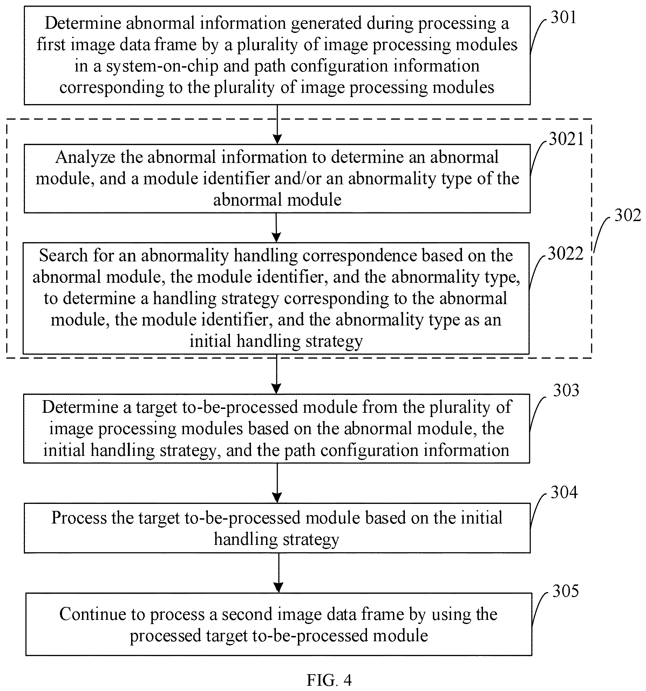

As shown in FIG. 4, on the basis of the embodiment shown in FIG. 3, step 302 may include the following steps 3021 and 3022.

Step 3021. Analyze the abnormal information to determine the abnormal module, and a module identifier and/or an abnormality type of the abnormal module.

For example, the module identifier of the abnormal module may be used to represent or indicate a character or a string of the abnormal module. In some examples, the module identifier of the abnormal module may be a string composed of numbers and letters, and composition of the string is not specifically limited in this embodiment of this disclosure. For example, the module identifier for an abnormal module may be S1 or S2.

For example, the abnormality type may be a name of an abnormality, which may include a registration task abnormality, a line abnormality, a parity check abnormality, a cyclic redundancy check abnormality, a size abnormality, an error correction code abnormality, a potential abnormality, and a non-fatal abnormality. In some examples, the abnormality type may be determined based on a main subject or a handling operation with an abnormality. For example, if the main subject with the abnormality is a line, it may be determined that the abnormality type is the line abnormality. If the handling operation with the abnormality is parity check, it may be determined that the abnormality type is the parity check abnormality.

For example, as shown in FIG. 2, the recognition module 222 may receive and analyze the abnormal information to obtain a name, the identifier, and the abnormality type of the abnormal module.

Step 3022. Search for an abnormality handling correspondence based on the abnormal module, the module identifier, and the abnormality type, to determine a handling strategy corresponding to the abnormal module, the module identifier, and the abnormality type as the initial handling strategy.

For example, the abnormality handling correspondence may be represented as multiple handling strategies corresponding to various abnormalities. One abnormality may correspond to one handling strategy.

In some examples, the abnormality handling correspondence may include a correspondence between the module identifier and the handling strategy, a correspondence between the module name and the handling strategy, and a correspondence between the abnormality type and the handling strategy. For example, the abnormality handling correspondence may be shown in table 1 below.

**Table 1**

| Number | Subsystem | Module Name | Module Identifier | Abnormality Name | Handling Strategy |
|---|---|---|---|---|---|
| 1 | VIN | MIPI | S1 | Registration task abnormality /Line abnormality | Frame discard |
| 2 | VIN | CIM | S2 | Size abnormality/Parity check abnormality | Module reset |
| 3 | VPS system | ISP | S3 | Cyclic redundancy check Abnormality /Error correction code abnormality | Reset+frame discard |
| 4 | VPS system | PYM | S4 | Non-fatal abnormality/Potential abnormality | System reset |

For example, the abnormality type is the parity check code abnormality, the module identifier is S2, and the abnormal module is CIM. Table 1 may be searched through the abnormality type of parity check code abnormality, the module identifier S2, and the abnormal module CIM, to determine the handling strategy of module reset that corresponds to the abnormality type of parity check code abnormality, the module identifier S2, and the abnormal module CIM as the initial handling strategy.

In this embodiment of this disclosure, the abnormal module and the module identifier and/or the abnormality type of the abnormal module are determined by analyzing the abnormal information. Moreover, the abnormality handling correspondence is searched based on the abnormal module and the module identifier and/or the abnormality type of the abnormal module, and a handling strategy corresponding to the abnormal module and the module identifier and/or the abnormality type of the abnormal module is determined as the initial handling strategy. In this way, the valid initial handling strategy can be accurately determined when the abnormality handling correspondence can accurately reflect an actual situation of the FuSa abnormality and the handling strategy proposed for the FuSa abnormality is valid.

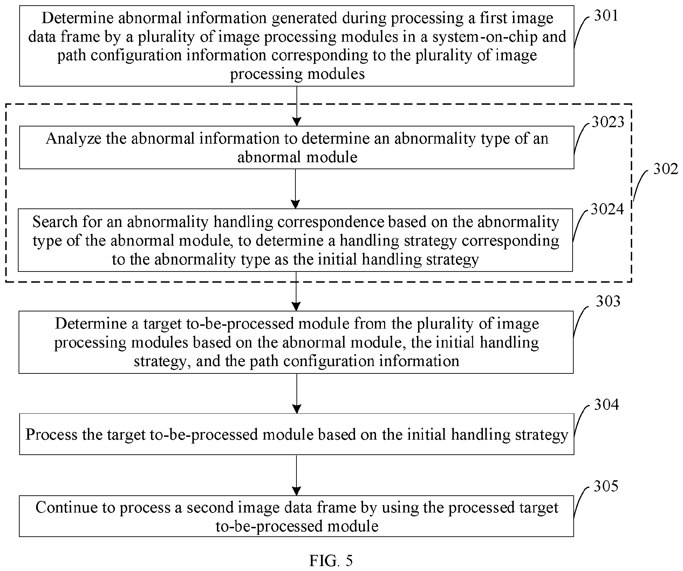

As shown in FIG. 5, on the basis of the embodiment shown in FIG. 3, step 302 may include steps 3023 and 3024.

Step 3023. Analyze the abnormal information to determine an abnormality type of the abnormal module.

For example, for implementation of step 3023, reference may be made to step 3021. Details are not described in this embodiment of this disclosure.

Step 3024. Search for an abnormality handling correspondence based on the abnormality type of the abnormal module, to determine a handling strategy corresponding to the abnormality type as the initial handling strategy.

For example, the abnormality type is the error correction code abnormality. The abnormality may be searched in table 1 through the error correction code abnormality, and the handling strategy of reset+frame discard that corresponds to the error correction code abnormality in table 1 is determined as the initial handling strategy.

In some examples, the abnormal information may be analyzed to determine the abnormal module, and the abnormality handling correspondence may be searched based on the abnormal module to determine a handling strategy corresponding to the abnormal module as the initial handling strategy. For example, the abnormal module is a CIM. Table 1 may be searched through the name CIM of the abnormal module, to determine the handling strategy of module reset in table 1 that corresponds to CIM as the initial handling strategy.

In some other examples, the abnormal information may be analyzed to determine the module identifier of the abnormal module, and the abnormality handling correspondence may be searched based on the module identifier of the abnormal module to determine a handling strategy corresponding to the module identifier as the initial handling strategy. For example, the module identifier is S2. Table 1 may be searched through the module identifier S2, to determine the handling strategy of module reset that corresponds to S2 in table 1 as the initial handling strategy.

In some other examples, the abnormal information may also be analyzed to determine two elements in the abnormal module and the module identifier and/or the abnormality type of the abnormal module, and the abnormality handling correspondence may be searched based on the two elements to determine a handling strategy corresponding to the two elements as the initial handling strategy. For example, the two elements are the abnormal module and the abnormality type of the abnormal module. The abnormal information may be analyzed to determine the abnormal module and the abnormality type of the abnormal module. The abnormality handling correspondence is searched based on the abnormal module and the abnormality type of the abnormal module, and a handling strategy corresponding to the abnormal module and the abnormality type of the abnormal module is determined as the initial handling strategy.

In this embodiment of this disclosure, the abnormal information is analyzed to determine the abnormality type of the abnormal module, and the abnormality handling correspondence is searched based on the abnormality type of the abnormal module to determine a handling strategy corresponding to the abnormality type of the abnormal module as the initial handling strategy. In this way, the valid initial handling strategy can be accurately determined when the abnormality handling correspondence can accurately reflect an actual situation of the FuSa abnormality and the handling strategy proposed for the FuSa abnormality is valid.

In some embodiments of this disclosure, the path configuration information may include first mode configuration information and second mode configuration information.

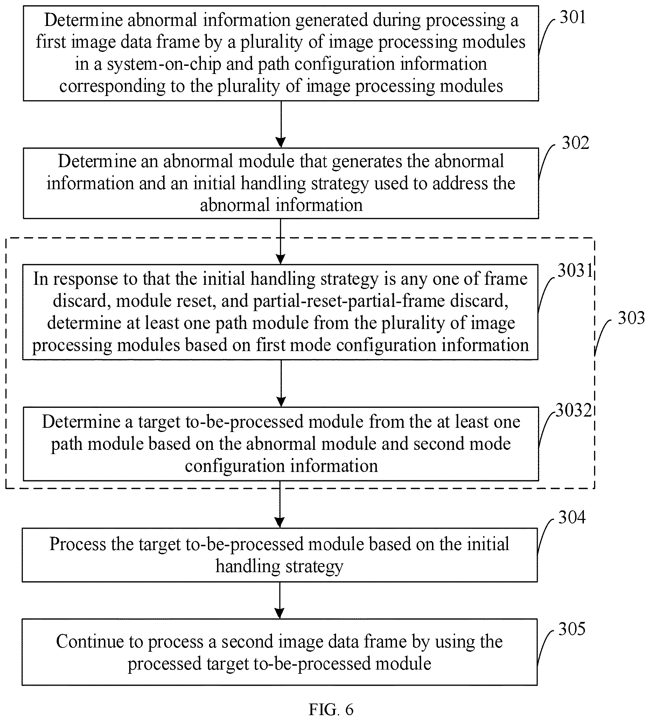

As shown in FIG. 6, on the basis of the embodiment shown in FIG. 3, step 303 may include the following steps 3031 and 3032.

Step 3031. In response to that the initial handling strategy is any one of frame discard, module reset, and partial-reset-partial-frame discard, determine at least one path module from the plurality of image processing modules based on first mode configuration information.

For example, the first mode configuration information may be used to configure connection manners for all image processing modules. The first mode configuration information may be the working mode configuration information in the embodiment shown in FIG. 1 or FIG. 2. In some examples, the first mode configuration information may include different identifiers corresponding to different connection manners (video paths). For example, the first mode configuration information may include an identifier CON 1 corresponding to a first connection mode or an identifier CON 2 corresponding to a second connection mode.

In some examples, as shown in FIG. 2, the first connection mode may correspond to a video path formed by sequentially connecting the MIPI module 2121, the ISP module 2123, the PYM module 2124, and the JPU 2126. The second connection mode may correspond to a video path formed by sequentially connecting the MIPI module 2121, the CIM 2122, the ISP module 2123, the PYM module 2124, and the JPU 2126.

For example, when the initial handling strategy is any one of frame discard, module reset, and partial-reset-partial-frame discard, a path module for processing the first image data frame and connection relationships between the various path modules may be determined from the plurality of image processing modules based on the first mode configuration information.

In some examples, as shown in FIG. 2, when the arbitration module 223 receives the initial handling strategy and the first mode configuration information, and determines that the initial handling strategy is any one of the frame discard, the module reset, and the partial-reset-partial-frame discard, the first mode configuration information is parsed to determine a path module configured to process the first image data frame and the connection relationships between the various path modules. For example, when the first mode configuration information includes the identifier CON 1, it is determined that the at least one path module includes the MIPI module 2121, the ISP module 2123, the PYM module 2124, and the JPU 2126 that are sequentially connected.

Step 3032. Determine the target to-be-processed module from the at least one path module based on the abnormal module and second mode configuration information.

The at least one path module includes the abnormal module.

For example, the second configuration information may be used to configure a working mode for each image processing module. The second mode configuration information may be the working mode configuration information in the embodiment shown in FIG. 1 or FIG. 2. In some examples, the second configuration information may include identifiers used to represent different use scenarios of customers. For example, the second configuration information may include an identifier Front corresponding to a forward-view scenario, Back corresponding to a backward-view scenario, Round corresponding to a panoramic-view scenario, and Side corresponding to a side-view scenario.

For example, as shown in FIG. 2, the arbitration module 223 may parse the second mode configuration information to obtain a use scenario of the user, and determine the target to-be-processed module from the at least one path module based on the use scenario of the user and the preset image processing module determining rule. For example, when the second configuration information is parsed to obtain the identifier Front, the use scenario of the user is determined as the forward-view scenario, and working characteristics of each path module in the forward-view scenario are determined. The target to-be-processed module may be determined based on the working characteristics of each path module in the forward-view scenario and the preset image processing module determining rule.

In the embodiments of this disclosure, when the initial handling strategy is any one of the frame discard, the module reset, and the partial-reset-partial-frame discard, at least one path module is determined from the plurality of image processing modules based on the first mode configuration information. In this way, the target to-be-processed module for processing the first image data frame may be accurately determined from the VPS.

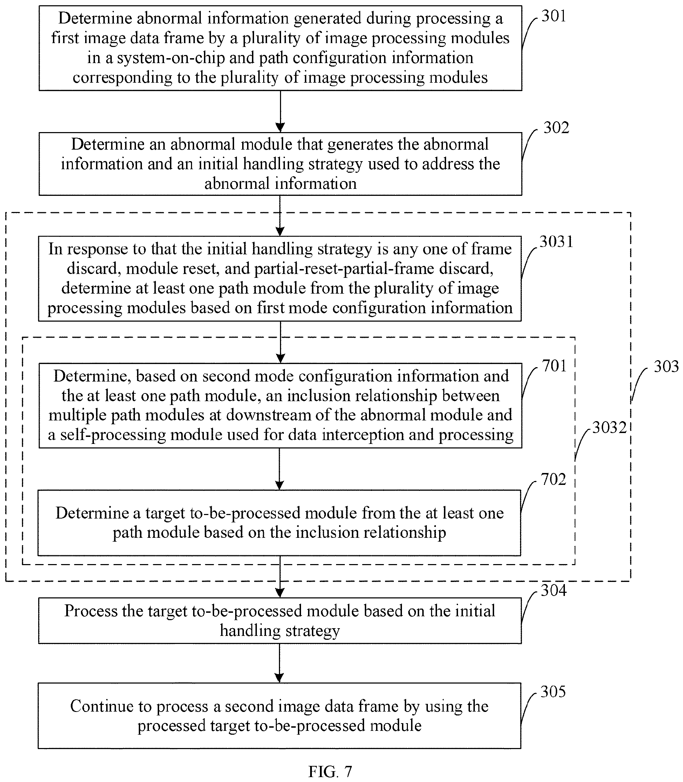

As shown in FIG. 7, on the basis of the embodiment shown in FIG. 6, step 3032 may include the following steps 701 and 702.

Step 701. Determine, based on the second mode configuration information and the at least one path module, an inclusion relationship between multiple path modules at downstream of the abnormal module and a self-processing module used for data interception and processing.

For example, the multiple path modules at downstream of the abnormal module refer to multiple path modules that are connected after the abnormal module on the video path. In some examples, the multiple path modules at downstream of the abnormal module may be determined based on the abnormal module and the first mode configuration information. For example, as shown in FIG. 2, if a video path corresponding to the first mode configuration information is formed by sequentially connecting the MIPI module 2121, the ISP module 2123, the PYM module 2124, and the JPU 2126, and the abnormal module is the MIPI module 2121, it may be determined that the ISP module 2123, the PYM module 2124, and the JPU 2126 are the multiple path modules at downstream of the abnormal module.

For example, the self-processing module may be an image processing module configured to implement data interception and processing functionality among image processing modules with a data interception and processing function. In some examples, the self-processing module may refer to an image processing module that saves the processed image data to synchronous dynamic random access memory (Double Data Rate (Synchronous Dynamic Random Access Memory, SDRAM), DDR) (such as a lower DDR) during the process of processing the image data. For example, as shown in FIG. 2, the self-processing module may be the ISP module 2123.

For example, the inclusion relationship may be inclusion or exclusion, which is not specifically limited in the embodiments of this disclosure.

In some examples, if the inclusion relationship is inclusion, the multiple path modules at downstream of the abnormal module include the self-processing module used for data interception and processing. For example, the video path includes the MIPI module 2121, the ISP module 2123, the PYM module 2124, and the JPU 2126 that are sequentially connected, the abnormal module is the MIPI module 2121, and the multiple path modules at downstream of the abnormal module include the ISP module 2123, the PYM module 2124, and the JPU 2126. If it is determined based on the second mode configuration information that the ISP module 2123 with a data interception and processing function is configured to implement data interception and processing, that is, the ISP module 2123 is a self-processing module, it is determined that the multiple path modules at downstream of the abnormal module, that is, the ISP module 2123, the PYM module 2124, and the JPU 2126, include the self-processing modules used for data interception and processing.

In some other examples, if the inclusion relationship is exclusion, the multiple path modules at downstream of the abnormal module do not include the self-processing module used for data interception and processing. For example, the video path includes the MIPI module 2121, the ISP module 2123, the PYM module 2124, and the JPU 2126 that are sequentially connected, the abnormal module is the PYM module 2124, and the multiple path modules at downstream of the abnormal module include the JPU 2126. If it is determined based on the second mode configuration information that the ISP module 2123 with a data interception and processing function is configured to implement data interception and processing, that is, the ISP module 2123 is a self-processing module, it is determined that the multiple path modules at downstream of the abnormal module, that is, the JPU 2126, do not include the self-processing modules used for data interception and processing.

For example, the second mode configuration information may be parsed first, the use scenario of the user may be determined based on a parsing result, and the self-processing module used for data interception and processing that corresponds to the use scenario of the user (corresponding to the working characteristics of each path module) may be determined. Subsequently, it is determined whether the multiple path modules at downstream of the abnormal module on the video path include the self-processing module used for data interception and processing that corresponds to the use scenario.

In some examples, as shown in FIG. 2, the arbitration module 223 may first parse the second mode configuration information that includes the identifier Front; and determine that the use scenario of the user is a forward-view scenario when the Front is obtained through parsing. Subsequently, it is determined whether the path modules at downstream of the abnormal module include the self-processing module corresponding to the forward-view scenario, that is, the ISP module 2123.

Step 702. Determine the target to-be-processed module from the at least one path module based on the inclusion relationship.

For example, if a determining result is that the path modules at downstream of the abnormal module include the self-processing module used for data interception and processing, it is needed to determine the target to-be-processed module from the at least one path module based on the initial handling strategy and the self-processing module. If the determining result is that the path modules at downstream of the abnormal module do not include the self-processing module used for data interception and processing, it is needed to determine the target to-be-processed module based on the at least one path module.

In some examples, in response to that the initial handling strategy is the frame discard and the multiple path modules at downstream of the abnormal module include the self-processing module, the self-processing module may be determined as the target to-be-processed module; and in response to that the initial handling strategy is the frame discard but the multiple path modules at downstream of the abnormal module do not include the self-processing module, the at least one path module may be determined as the target to-be-processed module.

For example, as shown in FIG. 2, if the abnormal module is the MIPI module 2121, the initial handling strategy is the frame discard, the self-processing module is the ISP module 2123, and the video path includes the MIPI module 2121, the ISP module 2123, the PYM module 2124, and the JPU 2126, that is, the path modules at downstream of the abnormal module include the ISP module 2123, the arbitration module 223 may determine the ISP module 2123 as the target to-be-processed module. If the abnormal module is the PYM module 2124, the initial handling strategy is the frame discard, the self-processing module is the ISP module 2123, and the video path includes the MIPI module 2121, the ISP module 2123, the PYM module 2124, and the JPU 2126, that is, the path modules at downstream of the abnormal module do not include the ISP module 2123, the arbitration module 223 may determine the MIPI module 2121, the ISP module 2123, the PYM module 2124, and the JPU 2126 (all path modules on the video path) as the target to-be-processed module.

In the embodiments of this disclosure, the self-processing module is determined as the target to-be-processed module when the initial handling strategy is the frame discard and the multiple path modules at downstream of the abnormal module include the self-processing module. In this way, the FuSa abnormality generated by the abnormal module can be quickly and conveniently eliminated by using the self-processing module. The at least one path module is determined as the target to-be-processed module when the initial handling strategy is the frame discard and the multiple path modules at downstream of the abnormal module do not include the self-processing module. In this way, the FuSa abnormality generated by the abnormal module can be effectively eliminated through linkage of the at least one path module.

In some examples, in response to that the initial handling strategy is module reset and the multiple path modules at downstream of the abnormal module include the self-processing module, the self-processing module and a path module at upstream of the self-processing module may be determined as the target to-be-processed module; and in response to that the initial handling strategy is module reset but the multiple path modules at downstream of the abnormal module do not include the self-processing module, the at least one path module may be determined as the target to-be-processed module.

For example, as shown in FIG. 2, if the abnormal module is the MIPI module 2121, the initial handling strategy is the module reset, the self-processing module is the ISP module 2123, and the video path includes the MIPI module 2121, the ISP module 2123, the PYM module 2124, and the JPU 2126, that is, the path modules at downstream of the abnormal module include the ISP module 2123, the arbitration module 223 may determine the ISP module 2123 and the MIPI module 2121 at upstream of the ISP module 2123 as the target to-be-processed module. If the abnormal module is the PYM module 2124, the initial handling strategy is the module reset, the self-processing module is the ISP module 2123, and the video path includes the MIPI module 2121, the ISP module 2123, the PYM module 2124, and the JPU 2126, that is, the path modules at downstream of the abnormal module do not include the ISP module 2123, the arbitration module 223 may determine the MIPI module 2121, the ISP module 2123, the PYM module 2124, and the JPU 2126 as the target to-be-processed module.

In the embodiments of this disclosure, the self-processing module and the path module at upstream of the self-processing module are determined as the target to-be-processed module when the initial handling strategy is the module reset and the multiple path modules at downstream of the abnormal module include the self-processing module. In this way, the FuSa abnormality generated by the abnormal module can be quickly and conveniently eliminated by using the self-processing module and the path module at upstream of the self-processing module. The at least one path module is determined as the target to-be-processed module when the initial handling strategy is the module reset and the multiple path modules at downstream of the abnormal module do not include the self-processing module. In this way, the FuSa abnormality generated by the abnormal module can be eliminated relatively effectively through the linkage of the at least one path module.

In some examples, in response to that the initial handling strategy is the partial-reset-partial-frame discard and the multiple path modules at downstream of the abnormal module include the self-processing module, the self-processing module and the path module at upstream of the self-processing module are determined as the target to-be-processed module when resetting is performed on the path module, and a path module at downstream of the self-processing module is determined as the target to-be-processed module when frame discarding is performed on the path module.

For example, the partial-reset-partial-frame discard refers to processing the first image data frame twice, with the first time being reset and the second time being frame discard. In some examples, resetting may be performed on some of the path modules on the video path, and frame discarding may be performed on the other path modules on the video path. For example, as shown in FIG. 2, if the video path includes the MIPI module 2121, the ISP module 2123, the PYM module 2124, and the JPU 2126, resetting may be performed on the MIPI module 2121 and the ISP module 2123, and frame discarding may be performed on the PYM module 2124 and the JPU 2126.

For example, as shown in FIG. 2, if the abnormal module is the MIPI module 2121, the initial handling strategy is the partial-reset-partial-frame discard, the self-processing module is the ISP module 2123, and the video path includes the MIPI module 2121, the ISP module 2123, the PYM module 2124, and the JPU 2126, that is, the path modules at downstream of the abnormal module include the ISP module 2123, when resetting the path modules, the arbitration module 223 determines the ISP module 2123 and the MIPI module 2121 at upstream of the ISP module 2123 as the target to-be-processed module. When performing frame discarding on the path module, the arbitration module 223 determines the PYM module 2124 and the JPU 2126 that are at downstream of the ISP module 2123 as the target to-be-processed module.

In the embodiments of this disclosure, in response to that the initial handling strategy is the partial-reset-partial-frame discard and the multiple path modules at downstream of the abnormal module include the self-processing module, the self-processing module and the path module at upstream of the self-processing module are determined as the target to-be-processed module when resetting is performed on the path module, and the path module at downstream of the self-processing module is determined as the target to-be-processed module when frame discarding is performed on the path module. In this way, the FuSa abnormality generated by the abnormal module can be quickly and conveniently eliminated by performing resetting on the self-processing module and the path module at upstream of the self-processing module, and performing frame discarding on the path module at downstream of the self-processing module.

In the embodiments of this disclosure, the inclusion relationship between the multiple path modules at downstream of the abnormal module and the self-processing module used for data interception and processing is determined based on the second mode configuration information and the at least one path module, and the target to-be-processed module is determined from the at least one path module based on the inclusion relationship. In this way, the target to-be-processed module that can quickly and conveniently eliminate the FuSa abnormality can be accurately determined from the at least one path module based on the second mode configuration information.

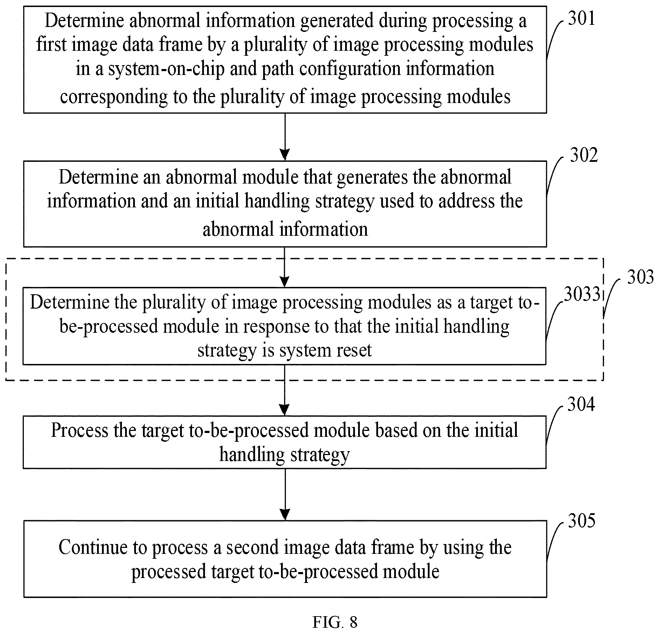

As shown in FIG. 8, on the basis of the embodiment shown in FIG. 3, step 303 may include the following step 3033.

Step 3033. Determine the plurality of image processing modules as the target to-be-processed module in response to that the initial handling strategy is system reset.

For example, as shown in FIG. 2, when the recognition module 222 determines that the initial handling strategy is the system reset, a system reset request may be reported to an onboard microcontroller unit (MCU), and all image processing modules in the VSP 21 may be reset through the onboard MCU.

In the embodiments of this disclosure, the plurality of image processing modules are determined as the target to-be-processed module in response to that the initial handling strategy is the system reset. In this way, the VPS in the in-vehicle system may be reset.

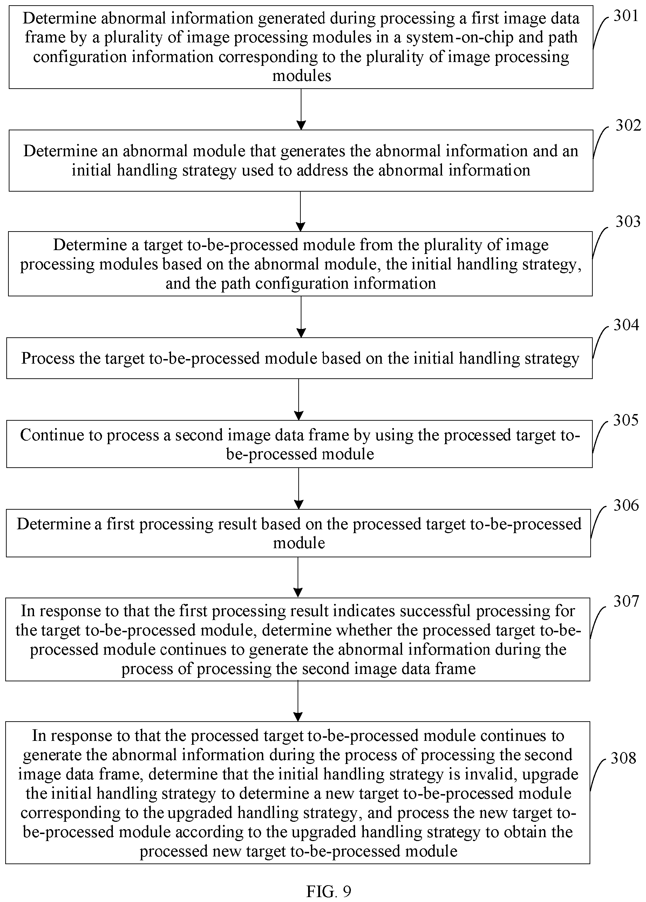

As shown in FIG. 9, on the basis of the embodiment shown in FIG. 3, the system-on-chip-based image processing method further includes the following steps 306 to 308.

Step 306. Determine a first processing result based on the processed target to-be-processed module.

For example, the first processing result may refer to a result indicating whether the target to-be-processed module is processed successfully. The first processing result may include a processing result string indicating successful or failed processing. In some examples, the first processing result may include YES for indicating successful processing or NO for indicating failed processing. In some other examples, the first processing result may include 00 for indicating successful processing or 11 for indicating failed processing. This is not limited in the embodiments of this disclosure.

For example, the target to-be-processed module may generate the first processing result based on a state parameter of the target to-be-processed module or the processed image data after receiving the processing operation instructions and processing internal logic thereof in response to the processing operation instructions.

In some examples, as shown in FIG. 2, if the target to-be-processed module is the ISP module 2123 and a processing operation is to discard 5 frames, the ISP module 2123 responds to the processing operation and discards 5 frames of data from the image data output after the first image data frame is processed by the ISP module 2123, to obtain the image data on which frame discarding is performed. The ISP module 2123 generates the first processing result for indicating success or failure of the frame discard based on the image data on which frame discarding is performed, and reports the first processing result to the arbitration module 223.

For example, if the ISP module 2123 determines that a size of the image data on which frame discarding is performed is same as that of the image data before frame discarding is performed, it is determined that frame discard is failed. In this case, the ISP module 2123 generates NO indicating failed processing and reports NO as the first processing result to the arbitration module 223. If the ISP module 2123 determines that the image data on which frame discarding is performed is 5 frames smaller than the image data before frame discarding is performed, it is determined that frame discard succeeds. In this case, the ISP module 2123 generates YES indicating successful processing and reports YES as the first processing result to the arbitration module 223.

Step 307. In response to that the first processing result indicates successful processing for the target to-be-processed module, determine whether the processed target to-be-processed module continues to generate the abnormal information during the process of processing the second image data frame.

For example, as shown in FIG. 2, the arbitration module 223 may analyze the received first processing result to determine whether to continue to receive the same abnormal module and the same initial handling strategy within preset duration when it is determined that the first processing result indicates successful frame discard for the ISP module 2123. In other words, it is determined whether the processed target to-be-processed module continues to generate the abnormal information during the process of processing the second image data frame.

Step 308. In response to that the processed target to-be-processed module continues to generate the abnormal information during the process of processing the second image data frame, determine that the initial handling strategy is invalid, upgrade the initial handling strategy to determine a new target to-be-processed module corresponding to the upgraded handling strategy, and process the new target to-be-processed module according to the upgraded handling strategy to obtain the processed new target to-be-processed module.

For example, as shown in FIG. 2, if the arbitration module 223 continues to receive the same abnormal module and the same initial handling strategy, it is determined that the initial handling strategy is invalid and the FuSa abnormality occurring in the abnormal module is not eliminated. Subsequently, the arbitration module 223 may upgrade the handling strategy, determine the new target to-be-processed module corresponding to the upgraded handling strategy based on the abnormal module and the second mode configuration information, and process the new target to-be-processed module according to the upgraded handling strategy to obtain the processed new target to-be-processed module.

In some examples, if the initial handling strategy is to discard 3 frames of data, the upgraded handling strategy may be to discard 7 frames of data. In this case, the new target to-be-processed module corresponding to the upgraded handling strategy may be same as the target to-be-processed module corresponding to the initial handling strategy. For example, the new target to-be-processed module corresponding to the upgraded handling strategy and the target to-be-processed module corresponding to the initial handling strategy may both be ISP modules 2123.

In some other examples, if the initial handling strategy is to discard 10 frames of data, the upgraded handling strategy may be module reset. In this case, the new target to-be-processed module corresponding to the upgraded handling strategy may be different from the target to-be-processed module corresponding to the initial handling strategy. For example, the target to-be-processed module corresponding to the initial handling strategy may be the ISP module 2123, while the new target to-be-processed module corresponding to the upgraded handling strategy may be the MIPI module 2121 and the ISP module 2123.

For example, the implementation of determining the new target to-be-processed module corresponding to the upgraded handling strategy based on the abnormal module and the second mode configuration information may be similar to the implementation of determining the target to-be-processed module corresponding to the initial handling strategy based on the abnormal module and the second mode configuration information. Reference may be made to the embodiments shown in FIG. 6 and FIG. 7, and details are not described in the embodiments of this disclosure.

For example, the implementation of processing the new target to-be-processed module according to the upgraded handling strategy to obtain the processed new target to-be-processed module is similar to the implementation of processing the target to-be-processed module according to the initial handling strategy to obtain the processed target to-be-processed module. Reference may be made to the embodiment shown in FIG. 3, and details are not described in the embodiments of this disclosure.

In the embodiments of this disclosure, when the target to-be-processed module is successfully processed, it is determined whether the processed target to-be-processed module needs to generate the abnormal information when processing the second image data frame, and when the processed target to-be-processed module continues to generate the abnormal information when processing the second image data frame, it is determined that the initial handling strategy is invalid. In this way, validity of the initial handling strategy may be accurately determined. Subsequently, the initial handling strategy is upgraded, the new target to-be-processed module is determined through the upgraded handling strategy, and the new target to-be-processed module is processed through the upgraded handling strategy, so as to obtain the processed new target to-be-processed module. In this way, by upgrading the initial handling strategy and processing the new target to-be-processed module according to the upgraded handling strategy, the FuSa abnormality can be eliminated more effectively as compared to the initial handling strategy.

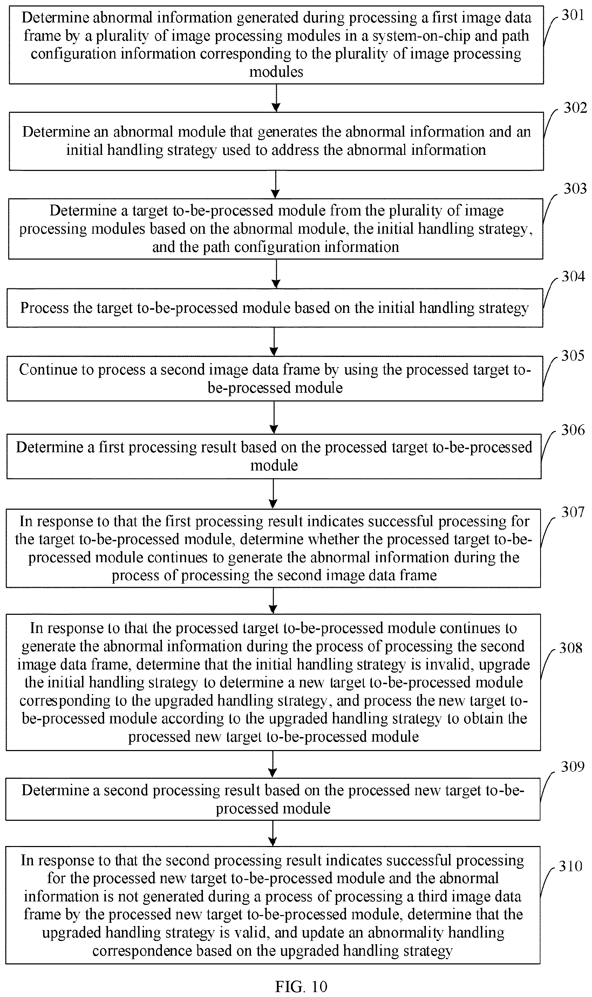

As shown in FIG. 10, on the basis of the embodiment shown in FIG. 9, the system-on-chip-based image processing method further includes steps 309 and 310.

Step 309. Determine a second processing result based on the processed new target to-be-processed module.

For example, the second processing result may refer to a result indicating whether the new target to-be-processed module has been processed successfully. Similar to the first processing result, the second processing result may also include a processing result indicating successful processing or failed processing. This is not specifically described in the embodiments of this application.

For example, implementation of step 309 is similar to that of step 306, and details are not described herein again.

Step 310. In response to that the second processing result indicates successful processing for the processed new target to-be-processed module and the abnormal information is not generated during a process of processing a third image data frame by the processed new target to-be-processed module, determine that the upgraded handling strategy is valid, and update the abnormality handling correspondence based on the upgraded handling strategy.

For example, as shown in FIG. 2, the third image data frame may be a raw image output from the camera to the processing module 212 after the second image data frame. In some examples, acquisition time of the third image data frame and the second image data frame may or may not be consecutive, which is not limited in the embodiments of this disclosure.

For example, as shown in FIG. 2, when the arbitration module 223 determines that the processing for the processed new target to-be-processed module succeeds, if the same abnormal module and the same initial handling strategy are not received during the process of processing the third image data frame by the processed new target to-be-processed module, it is determined that the upgraded handling strategy is valid. Subsequently, the arbitration module 223 may update the abnormality handling correspondence in the recognition module 222 according to the upgraded handling strategy.

In the embodiments of this disclosure, the second processing result is determined based on the processed new target to-be-processed module. When the second processing result indicates successful processing for the processed new target to-be-processed module, it is determined whether the abnormal information is generated during the process of processing the third image data frame by the processed new target to-be-processed module. If no abnormal information is generated during the process of processing the third image data frame by the processed new target to-be-processed module, it is determined that the upgraded handling strategy is valid. In this way, validity of the upgraded handling strategy may be accurately determined according to whether the abnormal information is generated. Meanwhile, the abnormality handling correspondence is updated based on the upgraded handling strategy. In this way, the target to-be-processed module can be processed according to the valid handling strategy when the same FuSa abnormality occurs next time, thereby improving efficiency of handling the FuSa abnormality.

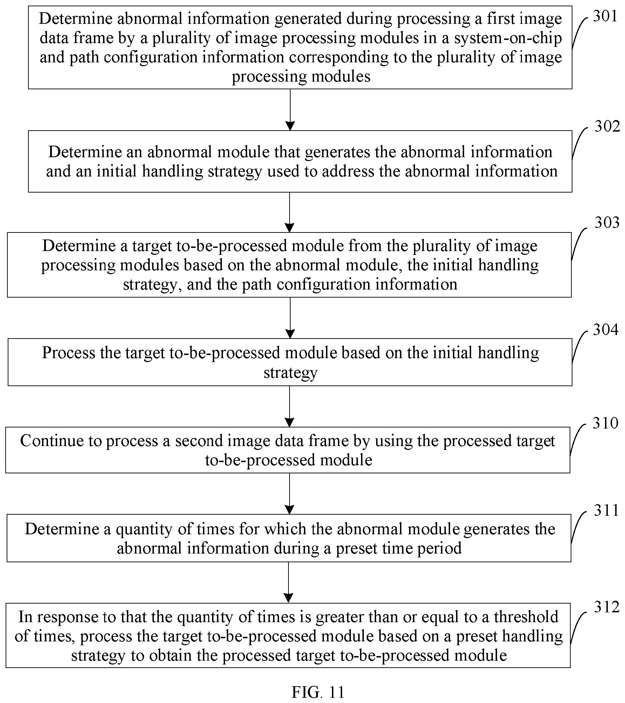

As shown in FIG. 11, on the basis of the embodiment shown in FIG. 3, the system-on-chip-based image processing method further includes steps 311 and 312.

Step 311. Determine a quantity of times for which the abnormal module generates the abnormal information during a preset time period.

For example, the preset time period may be a preset duration threshold, which may be determined based on abnormality handling time of the VPS. In some examples, the preset time period may be less than 10 s (seconds). For example, the preset time period may be 5 seconds.

For example, as shown in FIG. 2, the arbitration module 223 may count a quantity of times for which the same abnormal module and the same initial handling strategy are received from the recognition module 222 during the preset time period, and determine the quantity of times for which the same abnormal module and the same initial handling strategy are received as the quantity of times for which the abnormal module generates the abnormal information.

Step 312. In response to that the quantity of times is greater than or equal to a threshold of times, process the target to-be-processed module based on a preset handling strategy to obtain the processed target to-be-processed module.

The preset handling strategy is a valid strategy for eliminating the abnormal information.

For example, the threshold of times may be determined based on a danger level of the FuSa abnormality. A higher danger level indicates a smaller threshold of times, and a lower danger level indicates a larger threshold of times. In some examples, the threshold of times may be any integer greater than or equal to 1. For example, the threshold of times may be 10.

For example, the level of the preset handling strategy may be higher than that of the initial handling strategy. In some examples, the preset handling strategy may be a handling strategy that can quickly eliminate the FuSa abnormality. For example, when the initial handling strategy is the frame discard, the preset handling strategy may be the module reset; and when the initial handling strategy is the module reset, the preset handling strategy may be the system reset. This is not limited in the embodiments of this disclosure.

For example, as shown in FIG. 2, the arbitration module 223 may determine a relationship between the quantity of times for which the abnormal module generates the abnormal information during the preset time period and magnitude of the threshold of times. When the quantity of times for which the abnormal module generates the abnormal information during the preset time period is greater than or equal to the threshold of times, the initial handling strategy is directly upgraded to the preset handling strategy, the target to-be-processed module corresponding to the preset handling strategy is determined, and the target to-be-processed module corresponding to the preset handling strategy is processed according to the preset handling strategy, so as to obtain the processed target to-be-processed module.

In the embodiments of this disclosure, the quantity of times for which the abnormal module generates the abnormal information during the preset time period is determined, and the quantity of times for which the abnormal module generates the abnormal information during the preset time period is greater than or equal to the threshold of times, so that the target to-be-processed module is processed based on the preset handling strategy, so as to obtain the processed target to-be-processed module. In this way, when the preset handling strategy is a valid strategy, processing the target to-be-processed module based on the preset handling strategy can quickly and effectively eliminate the FuSa abnormality, thereby improving efficiency of handling the FuSa abnormality and improving safety of intelligent driving.

### Exemplary apparatus

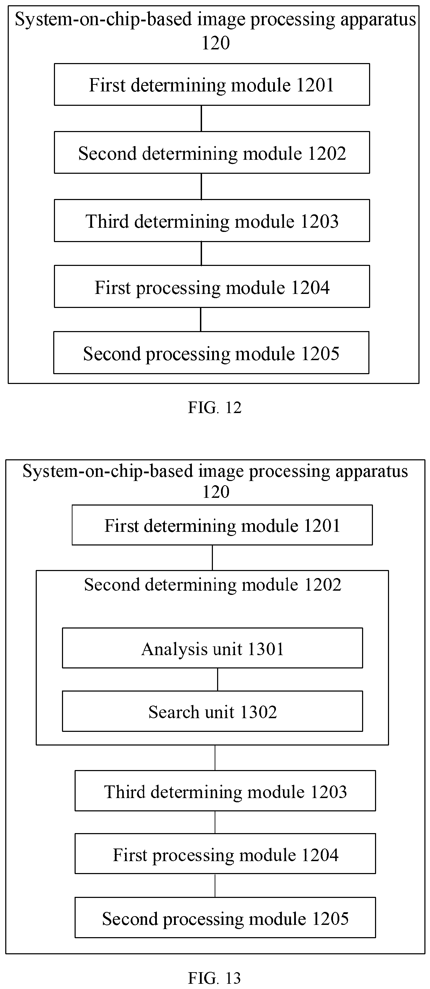

FIG. 12 is a schematic diagram of a composition and structure of a system-on-chip-based image processing apparatus according to an exemplary embodiment of this disclosure. As shown in FIG. 12, a system-on-chip-based image processing apparatus 120 may include a first determining module 1201, a second determining module 1202, a third determining module 1203, a first processing module 1204, and a second processing module 1205.

The first determining module 1201 is configured to determine abnormal information generated during processing a current image data frame by a plurality of image processing modules in the system-on-chip and path configuration information corresponding to the plurality of image processing modules.

The second determining module 1202 is configured to determine an abnormal module that generates the abnormal information and an initial handling strategy used to address the abnormal information.

The third determining module 1203 is configured to determine a target to-be-processed module from the plurality of image processing modules based on the abnormal module, the initial handling strategy, and the path configuration information.

The first processing module 1204 is configured to process the target to-be-processed module based on the initial handling strategy.

The second processing module 1205 is configured to continue to process a next image data frame by using the processed target to-be-processed module.

In some embodiments, as shown in FIG. 13, on the basis of the embodiment shown in FIG. 12, the second determining module 1202 may include an analysis unit 1301 and a search unit 1302.

The analysis unit 1301 is configured to analyze the abnormal information to determine the abnormal module, and a module identifier and/or an abnormality type of the abnormal module.

The search unit 1302 is configured to search for an abnormality handling correspondence based on the abnormal module, the module identifier, and/or the abnormality type, to determine a handling strategy corresponding to the abnormal module, the module identifier, and/or the abnormality type as the initial handling strategy.

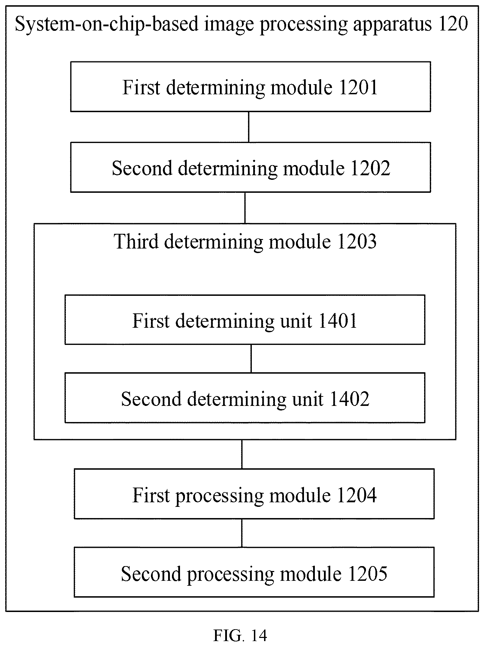

In some embodiments, as shown in FIG. 14, on the basis of the embodiment shown in FIG. 12, the third determining module 1203 includes a first determining unit 1401 and a second determining unit 1402.

The first determining unit 1401 is configured to determine at least one path module from the plurality of image processing modules based on first mode configuration information in response to that the initial handling strategy is any one of frame discard, module reset, and partial-reset-partial-frame discard.

The second determining unit 1402 is configured to determine the target to-be-processed module from the at least one path module based on the abnormal module and second mode configuration information.

The at least one path module includes the abnormal module. The first mode configuration information is used to configure a connection manner for each image processing module. The second configuration information is used to configure a working mode for each image processing module. The path configuration information includes the first mode configuration information and the second mode configuration information.

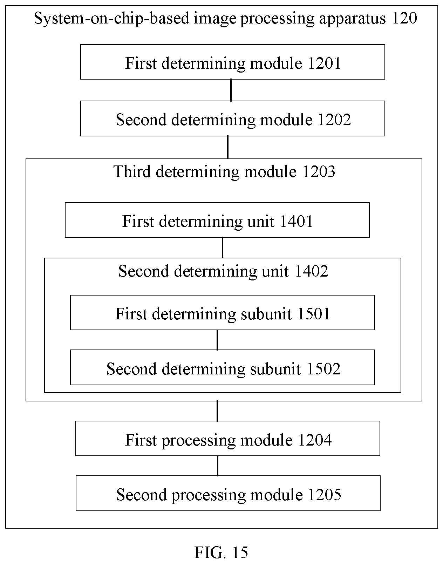

In some embodiments, as shown in FIG. 15, on the basis of the embodiments shown in FIG. 14, the second determining unit 1402 includes a first determining subunit 1501 and a second determining subunit 1502.

The first determining subunit 1501 is configured to determine, based on the second mode configuration information and the at least one path module, an inclusion relationship between multiple path modules at downstream of the abnormal module and a self-processing module used for data interception and processing.

The second determining subunit 1502 is configured to determine the target to-be-processed module from the at least one path module based on the inclusion relationship.

In some embodiments, the second determining subunit 1502 is specifically configured to determine the self-processing module as the target to-be-processed module in response to that the initial handling strategy is frame discard and the multiple path modules at downstream of the abnormal module include the self-processing module; and determine the at least one path module as the target to-be-processed module in response to that the initial handling strategy is frame discard but the multiple path modules at downstream of the abnormal module do not include the self-processing module.

In some embodiments, the second determining subunit 1502 is specifically configured to determine the self-processing module and a path module at upstream of the self-processing module as the target to-be-processed module in response to that the initial handling strategy is module reset and the multiple path modules at downstream of the abnormal module include the self-processing module; and determine the at least one path module as the target to-be-processed module in response to that the initial handling strategy is module reset but the multiple path modules at downstream of the abnormal module do not include the self-processing module.

In some embodiments, in response to that the initial handling strategy is the partial-reset-partial-frame discard and the multiple path modules at downstream of the abnormal module include the self-processing module, the second determining subunit 1502 is specifically configured to determine the self-processing module and the path module at upstream of the self-processing module as the target to-be-processed module when resetting is performed on the path module, and determine a path module at downstream of the self-processing module as the target to-be-processed module when frame discarding is performed on the path module.

In some embodiments, the second determining subunit 1502 is specifically configured to determine the plurality of image processing modules as the target to-be-processed module in response to that the initial handling strategy is system reset.

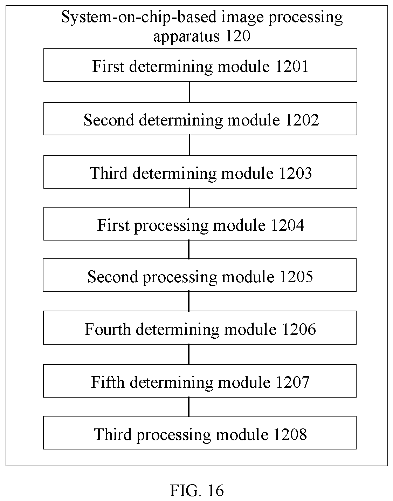

In some embodiments, as shown in FIG. 16, on the basis of the embodiment shown in FIG. 12, the system-on-chip-based image processing apparatus 120 further includes a fourth determining module 1206, a fifth determining module 1207, and a third processing module 1208.

The fourth determining module 1206 is configured to determine a first processing result based on the processed target to-be-processed module.

The fifth determining module 1207 is configured to determine, in response to that the first processing result indicates successful processing for the target to-be-processed module, whether the processed target to-be-processed module continues to generate the abnormal information during the process of processing the second image data frame.

The third processing module 1208 is configured to determine that the initial handling strategy is invalid in response to that the processed target to-be-processed module continues to generate the abnormal information during the process of processing the second image data frame, upgrade the initial handling strategy to determine a new target to-be-processed module corresponding to the upgraded handling strategy, and process the new target to-be-processed module according to the upgraded handling strategy to obtain the processed new target to-be-processed module.

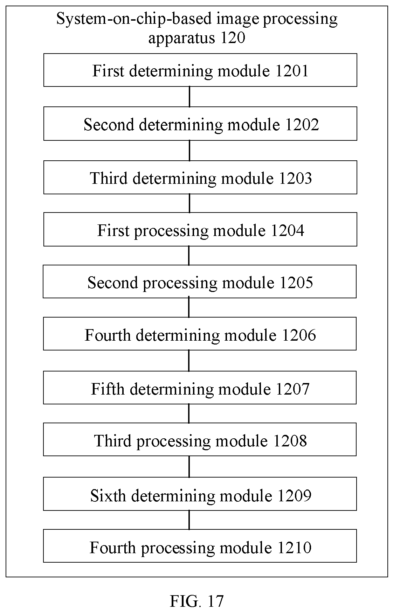

In some embodiments, as shown in FIG. 17, on the basis of the embodiment shown in FIG. 16, the system-on-chip-based image processing apparatus 120 further includes a sixth determining module 1209 and a fourth processing module 1210.

The sixth determining module 1209 is configured to determine a second processing result based on the processed new target to-be-processed module.

The fourth processing module 1210 is configured to determine that the upgraded handling strategy is valid in response to that the second processing result indicates successful processing for the processed new target to-be-processed module and the abnormal information is not generated during a process of processing a third image data frame by the processed new target to-be-processed module, and update the abnormality handling correspondence based on the upgraded handling strategy.

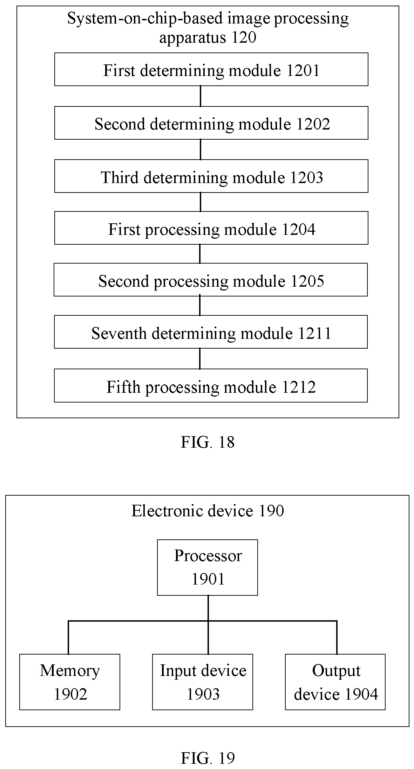

In some embodiments, as shown in FIG. 18, on the basis of the embodiment shown in FIG. 12, the system-on-chip-based image processing apparatus 120 further includes a seventh determining module 1211 and a fifth processing module 1212.

The seventh determining module 1211 is configured to determine a quantity of times for which the abnormal module generates the abnormal information during a preset time period.

The fifth processing module 1212 is configured to process, in response to that the quantity of times is greater than or equal to a threshold of times, the target to-be-processed module based on a preset handling strategy to obtain the processed target to-be-processed module.

The preset handling strategy is a valid strategy for eliminating the abnormal information.

Regarding the system-on-chip-based image processing apparatus in the foregoing embodiments, specific manners for each module to perform operations and corresponding beneficial effects have been described in detail in the corresponding embodiments of the system-on-chip-based image processing method, and reference may be made to the corresponding operation execution manners and the beneficial technical effects in the section of exemplary method described above, and details are not described herein again.

### Exemplary electronic device

FIG. 19 is a schematic diagram of a composition and structure of an electronic device according to an exemplary embodiment of this disclosure. As shown in FIG. 19, an electronic device 190 includes one or more processors 1901 and a memory 1902.

The processor 1901 may be a central processing unit (CPU) or another form of processing unit having a data processing capability and/or an instruction execution capability, and may control other components in the electronic device 190 to implement desired functions.

The memory 1902 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1901 may execute the program instruction to implement the system-on-chip-based image processing method according to various embodiments of this disclosure that are described above and/or other desired functions.

In an example, the electronic device 190 may further include an input device 1903 and an output device 1904. These components are connected to each other through a bus system and/or another form of connection mechanism (not shown).

Certainly, for simplicity, FIG. 19 shows only some of components in the electronic device 190 that are related to this application, and components such as a bus and an input/output interface are omitted. In addition, according to specific application situations, the electronic device 190 may further include any other appropriate components.

### Exemplary computer program product and computer readable storage medium

In addition to the foregoing method and device, the embodiments of this application may also relate to a computer program product, which includes computer program instructions. When the computer program instructions are run by a processor, the processor is enabled to perform the steps, of the system-on-chip-based image processing method according to the embodiments of this application, that are described in the "exemplary method" section of this specification.

The computer program product may be program code, written with one or any combination of a plurality of programming languages, that is configured to perform the operations in the embodiments of this application. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this application may further relate to a computer readable storage medium, which stores computer program instructions. When the computer program instructions are run by the processor, the processor is enabled to perform the steps, of the system-on-chip-based image processing method according to the embodiments of this disclosure, that are described in the "exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this application are described above in combination with specific embodiments. However, it should be pointed out that advantages, superiorities, and effects mentioned in this application are merely examples but are not for limitation, and it cannot be considered that these advantages, superiorities, and effects are necessary for each embodiment of this application. In addition, specific details described above are merely for examples and for ease of understanding, rather than limitations. The details described above do not limit that this application must be implemented by using the foregoing specific details.

The block diagrams of the equipment, the apparatus, the device, and the system involved in this application are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and can be used interchangeably with "including but not limited to". The terms "or" and "and" used herein refer to the term "and/or", and can be used interchangeably with "and/or", unless the context clearly indicates otherwise. The term "such as" used herein refers to the phrase "such as but not limited to", and can be used interchangeably with "such as but not limited to".

It should be further pointed out that, various components or various steps in the apparatus, the device, and the method of this application may be disassembled and/or recombined. These disassembling and/or recombinations shall be regarded as equivalent solutions of this application.

The foregoing description about the disclosed aspects is provided, so that this application can be arrived at or carried out by any person skilled in the art. Various modifications to these aspects are very obvious to a person skilled in the art. Moreover, general principles defined herein may be applicable to other aspects without departing from the scope of this application. Therefore, this application is not intended to be limited to the aspects illustrated herein, but to the widest scope consistent with the principles and novel features disclosed herein.

The foregoing descriptions are given for illustration and description. In addition, the description is not intended to limit the embodiments of this application to forms disclosed herein. Although a plurality of exemplary aspects and embodiments have been discussed above, a person skilled in the art may recognize certain variations, modifications, changes, additions, and subcombinations thereof.

## Claims

1. A system-on-chip-based image processing method, **characterized in that** the system-on-chip-based image processing method comprises:
determining (301) abnormal information generated during processing a first image data frame by a plurality of image processing modules in the system-on-chip and path configuration information corresponding to the plurality of image processing modules;
determining (302) an abnormal module that generates the abnormal information and an initial handling strategy used to address the abnormal information;
determining (303) a target to-be-processed module from the plurality of image processing modules based on the abnormal module, the initial handling strategy, and the path configuration information;
processing (304) the target to-be-processed module based on the initial handling strategy; and
continuing (305) to process a second image data frame by using the processed target to-be-processed module.

2. The method according to claim 1, wherein the determining (302) an abnormal module that generates the abnormal information and an initial handling strategy used to address the abnormal information comprises:
analyzing (3021) the abnormal information to determine the abnormal module, and a module identifier and/or an abnormality type of the abnormal module; and
searching (3022) for an abnormality handling correspondence based on the abnormal module, the module identifier, and/or the abnormality type, to determine a handling strategy corresponding to the abnormal module, the module identifier, and/or the abnormality type as the initial handling strategy.

3. The method according to claim 1, wherein the determining (303) a target to-be-processed module from the plurality of image processing modules based on the abnormal module, the initial handling strategy, and the path configuration information comprises:
in response to that the initial handling strategy is any one of frame discard, module reset, and partial-reset-partial-frame discard, determining (3031) at least one path module from the plurality of image processing modules based on first mode configuration information; and
determining (3032) the target to-be-processed module from the at least one path module based on the abnormal module and second mode configuration information, wherein
the at least one path module comprises the abnormal module; the first mode configuration information is used to configure a connection manner for each image processing module; the second mode configuration information is used to configure a working mode for each image processing module; and the path configuration information comprises the first mode configuration information and the second mode configuration information.

4. The method according to claim 3, wherein the determining (3032) the target to-be-processed module from the at least one path module based on the abnormal module and second mode configuration information comprises:
determining (701), based on the second mode configuration information and the at least one path module, an inclusion relationship between multiple path modules at downstream of the abnormal module and a self-processing module used for data interception and processing; and
determining (702) the target to-be-processed module from the at least one path module based on the inclusion relationship.

5. The method according to claim 4, wherein the determining (702) the target to-be-processed module from the at least one path module based on the inclusion relationship comprises:
determining the self-processing module as the target to-be-processed module in response to that the initial handling strategy is the frame discard and the multiple path modules at downstream of the abnormal module comprise the self-processing module; and
determining the at least one path module as the target to-be-processed module in response to that the initial handling strategy is the frame discard and the multiple path modules at downstream of the abnormal module do not comprise the self-processing module.

6. The method according to claim 4, wherein the determining (702) the target to-be-processed module from the at least one path module based on the inclusion relationship comprises:
determining the self-processing module and a path module at upstream of the self-processing module as the target to-be-processed module in response to that the initial handling strategy is the module reset and the multiple path modules at downstream of the abnormal module comprise the self-processing module; and
determining the at least one path module as the target to-be-processed module in response to that the initial handling strategy is the module reset and the multiple path modules at downstream of the abnormal module do not comprise the self-processing module.

7. The method according to claim 6, wherein the determining (702) the target to-be-processed module from the at least one path module based on the inclusion relationship comprises:
in response to that the initial handling strategy is the partial-reset-partial-frame discard and the multiple path modules at downstream of the abnormal module comprise the self-processing module, determining the self-processing module and the path module at upstream of the self-processing module as the target to-be-processed module when resetting the path module, and determining a path module at downstream of the self-processing module as the target to-be-processed module when frame discarding is performed on the path module.

8. The method according to claim 1, wherein the determining the target to-be-processed module from the at least one path module based on the abnormal module and second mode configuration information comprises:
determining (3033) the plurality of image processing modules as the target to-be-processed module in response to that the initial handling strategy is system reset.

9. The method according to any one of claims 1 to 8, wherein after the processing the target to-be-processed module based on the initial handling strategy to obtain the processed target to-be-processed module, the method comprises:
determining (306) a first processing result based on the processed target to-be-processed module;
in response to that the first processing result indicates successful processing for the target to-be-processed module, determining (307) whether the processed target to-be-processed module continues to generate the abnormal information during the process of processing the second image data frame; and
in response to that the processed target to-be-processed module continues to generate the abnormal information during the process of processing the second image data frame, determining that the initial handling strategy is invalid, upgrading (308) the initial handling strategy to determine a new target to-be-processed module corresponding to the upgraded handling strategy, and processing the new target to-be-processed module according to the upgraded handling strategy to obtain the processed new target to-be-processed module.

10. The method according to claim 9, wherein after the processing the new target to-be-processed module according to the upgraded handling strategy, the method further comprises:
determining (309) a second processing result based on the processed new target to-be-processed module;
in response to that the second processing result indicates successful processing for the processed new target to-be-processed module and the abnormal information is not generated during a process of processing a third image data frame by the processed new target to-be-processed module, determining (310) that the upgraded handling strategy is valid, and updating the abnormality handling correspondence based on the upgraded handling strategy.

11. The method according to any one of claims 1 to 8, further comprising:
determining (311) a quantity of times for which the abnormal module generates the abnormal information during a preset time period; and
in response to that the quantity of times is greater than or equal to a threshold of times, processing (312) the target to-be-processed module based on a preset handling strategy to obtain the processed target to-be-processed module, wherein the preset handling strategy is a valid strategy for eliminating the abnormal information.

12. A system-on-chip-based image processing apparatus (120), **characterized in that** the system-on-chip-based image processing apparatus comprises:
a first determining module (1201), configured to determine abnormal information generated during processing a current image data frame by a plurality of image processing modules in the system-on-chip and path configuration information corresponding to the plurality of image processing modules;
a second determining module (1202), configured to determine an abnormal module that generates the abnormal information and an initial handling strategy used to address the abnormal information;
a third determining module (1203), configured to determine a target to-be-processed module from the plurality of image processing modules based on the abnormal module, the initial handling strategy, and the path configuration information; and
a first processing module (1204), configured to process the target to-be-processed module based on the initial handling strategy to obtain the processed target to-be-processed module, so as to continue to process a next image data frame by using the processed target to-be-processed module.

13. The system-on-chip-based image processing apparatus (120) according to claim 12, wherein the the second determining module (1202) comprises:
a analysis unit (1301), which is configured to analyze the abnormal information to determine the abnormal module, and a module identifier and/or an abnormality type of the abnormal module: and
a search unit (1302), which is configured to search for an abnormality handling correspondence based on the abnormal module, the module identifier, and/or the abnormality type, to determine a handling strategy corresponding to the abnormal module, the module identifier, and/or the abnormality type as the initial handling strategy.

14. A computer readable storage medium, wherein the storage medium stores a computer program, and the computer program is used for implementing the system-on-chip-based image processing method according to any one of claims 1 to 11.

15. An electronic device (190), **characterized in that** the electronic device comprises:
a processor (1901); and
a memory (1902), configured to store processor-executable instructions, wherein
the processor (1901) is configured to read the executable instructions from the memory (1902), and execute the instructions to implement the system-on-chip-based image processing method according to any one of claims 1 to 11.
